# EUROPÄISCHE PATENTSCHRIFT

(11) **EP 3 813 355 B1**
(45) Veröffentlichungstag und Bekanntmachung des Hinweises auf die Patenterteilung: **06.07.2022**
(21) Anmeldenummer: 20198809.4
(22) Anmeldetag: 28.09.2020
(51) Int. Cl.: H04N 5/235, H04N 5/351, G06T 7/20, G06T 7/246, G06K 9/00, H04N 7/18, G01B 11/02, G06T 7/00, G01B 11/06, G01C 11/04, G06V 40/20, G06V 10/147

(54) **KAMERA ZUR ERFASSUNG EINES OBJEKTSTROMS UND VERFAHREN ZUR BESTIMMUNG DER HÖHE VON OBJEKTEN**
CAMERA FOR DETECTING AN OBJECT STREAM AND METHOD FOR DETERMINING THE HEIGHT OF OBJECTS
CAMÉRA DE DÉTECTION D'UN FLUX D'OBJETS ET PROCÉDÉ DE DÉTERMINATION DE LA HAUTEUR D'OBJETS

(30) Priorität: 25.10.2019 DE 102019128814
(43) Veröffentlichungstag der Anmeldung: 28.04.2021
(73) Patentinhaber: SICK AG, 79183 Waldkirch (DE)
(72) Erfinder: Müller, Romain, 79252 Stegen (DE); Schneider, Florian, 79276 Reute (DE)

(56) Entgegenhaltungen:
- EP-A1- 2 693 362
- EP-A1- 3 505 961
- US-A1- 2010 290 665
- US-A1- 2017 124 693

## Beschreibung

Die Erfindung betrifft eine Kamera zur Aufnahme von Bilddaten eines in einer Bewegungsrichtung relativ zu der Kamera bewegten Objektsstroms mit Objekten einer Höhe sowie ein Verfahren zur Bestimmung der Höhe von Objekten eines Objektstroms nach dem Oberbegriff von Anspruch 1 beziehungsweise 10.

Die optische Erfassung eines Objektstroms ist ein wichtiger Anwendungsfall für Automatisierungsaufgaben in der Industrie oder Logistik. Häufig werden die Objekte auf einer Förderbandanlage zwischen verschiedenen Prozessschritten gefördert. Manche Automatisierungsaufgaben erfordern dabei die Erfassung der dreidimensionalen Kontur der Objekte und insbesondere eine Messung der Höhe des Objekts beziehungsweise des bei bekanntem Abstand zum Untergrund gleichwertigen Abstands zwischen Objekt und Kamera. Das dient beispielsweise einer Einstellung der Fokuslage eines Kameraobjektivs oder einer Volumenerfassung der Objekte, wo die Höhe nicht nur als dritte Dimension eingeht, sondern auch benötig wird, um die Fläche des Objektbildes in Pixeln der Kamera in tatsächliche Maßeinheiten umzurechnen. Ein konkretes Anwendungsbeispiel unter vielen ist die Sortierung von Paketen oder sonstigen Objekten. Die Identifizierung erfolgt dabei in der Regel durch Lesen eines optischen Codes. Das Paketvolumen ist aber eine wichtige Zusatzgröße und jedenfalls die Höhe eine Hilfsgröße, um richtig zu fokussieren und Codes den Paketen zuzuordnen.

Im Stand der Technik ist bekannt, der Kamera einen zusätzlichen Sensor zuzuordnen, wie einen Laserscanner, der die Geometrievermessung übernimmt. Das bedeutet aber zusätzlichen Hardware- und Installationsaufwand. Eine andere Lösung bieten 3D-Kameras, die selbst Abstände messen, aber gegenüber 2D-Kameras deutlich teurer und in anderen Eigenschaften, wie der lateralen Auflösung, nicht von gleicher Qualität sind.

Denkbar ist auch, die Höhe aus mehreren Bildaufnahmen in zeitlichem Abstand zu gewinnen. Dadurch hat sich die Perspektive auf das Objekt verschoben, und so kann die Höhe nach dem Prinzip der Stereokamera gemessen werden. Dies ist aber ebenfalls aufwändig, und beispielsweise für eine Fokusnachführung steht der Höhenwert auch zu spät zur Verfügung.

In jüngster Zeit ist eine neuartige Kameratechnik entstanden, die sogenannte ereignis- oder eventbasierte Kamera. Sie wird in Anlehnung an den visuellen Cortex auch als neuromorphologische Kamera bezeichnet. Derartige Kameras wurden aber bisher nicht in den genannten Anwendungen eingesetzt, und sie bieten keine Möglichkeit, Tiefenwerte und damit eine Höhe eines erfassten Objekts zu messen. Eine herkömmliche Kamera belichtet mit einer regelmäßigen Frame- oder Bildwiederholrate alle ihre Pixel und liest sie dann gleichzeitig aus, um so eine der Bildwiederholrate entsprechende Anzahl stationärer zweidimensionaler Bilder pro betrachtetem Zeitraum zu gewinnen.

In einer ereignisbasierten Kamera gibt es ebenfalls eine Matrix von Pixeln, aber weder eine feste Bildwiederholrate noch ein gemeinsames Auslesen von Pixeln. Stattdessen prüft jedes Pixel einzeln, ob es eine Änderung in der Intensität feststellt. Nur in diesem Fall wird eine Bildinformation ausgegeben beziehungsweise ausgelesen, und zwar nur von diesem Pixel. Jedes Pixel ist somit eine Art unabhängiger Bewegungsdetektor. Eine erfasste Bewegung wird individuell als Ereignis gemeldet. Dadurch reagiert die ereignisbasierte Kamera äußerst schnell auf die Dynamik in der Szene. Die Bilddaten sind für das menschliche Auge nicht so intuitiv zu erfassen, weil die statischen Bildanteile fehlen.

Eine ereignisbasierte Kamera wird beispielsweise in einem Whitepaper der Firma Prophesee beschrieben, das auf deren Internetseite abgerufen werden kann.

Aus der WO 2015/036592 A1, WO 2017/174579 A1 und WO 2018/073379 A1 sind jeweils Pixelschaltkreise für eine ereignisbasierte Kamera bekannt.

Die Arbeit von Gallego, Guillermo, Henri Rebecq, und Davide Scaramuzza, "A unifying contrast maximization framework for event cameras, with applications to motion, depth, and optical flow estimation", IEEE Int. Conf. Comput. Vis. Pattern Recog.(CVPR), Vol. 1. 2018 stellt Verfahren vor, wie sich aus den Daten einer ereignisbasierten Kamera Bewegung, Entfernungen und optischer Fluss bestimmen lassen.

Die US 2013/0335595 A1 offenbart eine Vorrichtung und ein Verfahren zur ereignisbasierten Bildverarbeitung, konkret zur Bestimmung des optischen Flusses, der aber wie schon erwähnt ein recht komplexes und aufwändiges Werkzeug ist.

In der noch unveröffentlichten europäischen Anmeldung mit dem Aktenzeichen 18209953.1 wird eine ereignisbasierte Kamera zum Codelesen verwendet.

EP3505961A1, EP2693362A1 und US2010/290665A1 offenbaren verschiedene Kamerabasierte Verfahren zur Bestimmung von Objektabmessungen. US2017/124693A1 beschreibt die Lagebestimmung einer Ereignis-Kamera relativ zu einem Objekt.

Vor diesem Hintergrund ist daher Aufgabe der Erfindung, die Höhenmessung in einem Objektstrom mittels einer Kamera zu verbessern.

Diese Aufgabe wird durch eine Kamera zur Aufnahme von Bilddaten eines in einer Bewegungsrichtung relativ zu der Kamera bewegten Objektsstroms mit Objekten einer Höhe sowie ein Verfahren zur Bestimmung der Höhe von Objekten eines Objektstroms nach Anspruch 1 beziehungsweise 10 gelöst. Die Kamera weist einen Bildsensor mit einer Vielzahl von Pixelelementen beispielsweise in einer Zeilen- oder Matrixanordnung auf. Damit werden Bilddaten eines Objektstroms aus Objekten aufgenommen, die sich relativ zu der Kamera bewegen. Die Höhe dieser Objekte wird durch Auswertung der Bilddaten bestimmt. Dabei bedeutet Höhe die Ausdehnung in Richtung zu der Kamera. Beobachtet die Kamera nicht von oben, so ist es immer noch die Höhe aus Sicht der Kamera, auch wenn es objektiv etwa bei einer Seitenperspektive der Kamera eher die Breite wäre.

Die Erfindung geht von dem Grundgedanken aus, als Bildsensor einen ereignisbasierten Bildsensor zu verwenden. Die Kamera ist also eine ereignisbasierte Kamera anstelle einer herkömmlichen Kamera mit herkömmlichem Bildsensor. Die Unterschiede wurden einleitend kurz diskutiert: Die Pixel erkennen jeweils Veränderungen in der Intensität, statt einfach die jeweilige Intensität zu messen. Eine solcher Veränderung, die vorzugsweise rasch genug sein und ein Rauschmaß übersteigen sollte, ist eines der namensgebenden Ereignisse. Zudem werden Signale nur bei einer solchen Veränderung in der Intensität bereitgestellt beziehungsweise ausgelesen werden, und zwar nur von dem betroffenen Pixel oder den betroffenen Pixeln. Der Name ereignisbasierter Bildsensor steht für das Erfassungsprinzip, unabhängig von anderen denkbaren Namen wie neuromorphologischer Bildsensor.

Zur Bestimmung der Höhe eines Objekts wird eine Messreihe gebildet, wann jeweils in Bewegungsrichtung benachbarte Pixel ein Ereignis auslösen, wann also eine Objektkante jeweils das Sichtfeld des Pixels durchläuft. Im Prinzip reichen für eine lineare Schätzung zwei benachbarte Pixel, es werden aber vorzugsweise mehr und auch wesentlich mehr benachbarte Pixel herangezogen, und dafür steht eine Anzahl in der Größenordnung der Zeilen- beziehungsweise Spaltenauflösung des ereignisbasierten Bildsensors zur Verfügung. Werden diese Zeitpunkte nun über dem jeweils auslösenden Pixel angeordnet, so ergibt das eine diskrete Schätzung der Funktion der Zeit des Ereignisses in Abhängigkeit vom Pixel und damit dem Ort auf dem Bildsensor in Bewegungsrichtung. Diese Funktion ist entsprechend der Geschwindigkeit gestaucht oder gestreckt, mit der sich das Objektbild des erfassten Objekts über den Bildsensor bewegt. Diese Geschwindigkeit darf nicht mit der objektiven Geschwindigkeit des Objekts im realen Raum verwechselt werden. Die Geschwindigkeit des Objektbildes auf dem Bildsensor variiert mit der Nähe des Objekts und damit dessen Höhe, so dass diese Geschwindigkeit in die gesuchte Höhe umgerechnet werden kann beziehungsweise bis auf einen konstanten Umrechnungsfaktor bereits diese Höhe misst.

Die Erfindung hat den Vorteil, dass dank des ereignisbasierten Bildsensors auf besonders einfache und robuste Art die Höhe der Objekte bestimmt werden kann. Dadurch sind Entwicklungsaufwand und erforderliche Rechenkapazitäten erheblich reduziert. Aufgrund der ereignisbasierten Erfassung werden die bewegten Objektkanten automatisch erkannt. Zahlreiche herkömmliche Bildverarbeitungsschritte entfallen, wie Hintergundsegmentierung, Objekterkennung, Objektverfolgung über mehrere Frames, um deren Bewegung festzustellen. Der ereignisbasierte Bildsensor ist zudem gegenüber Fremdlicht unempfindlich. Gleichlicht verursacht keine Intensitätsänderung und löst folglich keine Ereignisse in den Pixeln aus. Eine modulierte Lichtquelle, wie beispielsweise eine mit 50 Hz modulierte Halogenlampe, kann von der Steuer- und Auswertungseinheit unterdrückt werden.

Ein jeweiliges Pixelelement stellt bevorzugt fest, wenn sich die von dem Pixelelement erfasste Intensität ändert, und liefert genau dann ereignisbasiert eine Bildinformation. Das besondere Verhalten der Pixelelemente einer ereignisbasierten Kamera wurde bereits mehrfach angesprochen. Das Pixelelement prüft, ob sich die erfasste Intensität verändert. Nur das ist ein Ereignis, und nur bei einem Ereignis wird eine Bildinformation ausgegeben oder ausgelesen. Es ist eine Art Hysterese denkbar, bei der das Pixelelement eine definierte, zu geringfügige Änderung der Intensität noch ignoriert und nicht als Ereignis auffasst.

Das Pixelelement liefert vorzugsweise als Bildinformation eine differentielle Information, ob sich die Intensität verringert oder erhöht hat. Die aus dem Pixelelement gelesene Information ist also beispielsweise ein Vorzeichen +1 oder-1 je nach Änderungsrichtung der Intensität. Dabei kann eine Schwelle für Intensitätsänderungen gesetzt sein, bis zu denen das Pixelelement noch kein Ereignis auslöst. In einer nachgelagerten internen Repräsentation zur weiteren Auswertung kann für Zeiten, zu denen kein Ereignis erfasst wurde, der Wert 0 ergänzt werden.

Das Pixelelement liefert bevorzugt als Bildinformation eine integrierte Intensität in einem durch eine Änderung der Intensität bestimmten Zeitfenster. Hier beschränkt sich die Information nicht auf eine Richtung der Intensitätsänderung, sondern es wird in einem durch das Ereignis festgelegten Zeitfenster das einfallende Licht integriert und dadurch ein Grauwert bestimmt. Der Messwert entspricht damit demjenigen einer herkömmlichen Kamera, aber der Zeitpunkt der Erfassung bleibt ereignisbasiert und an eine Intensitätsänderung gekoppelt.

Das jeweilige Pixelelement gibt Bildinformationen bevorzugt mit einer Aktualisierungsfrequenz von mindestens einem KHz oder sogar mindestens zehn KHz oder mehr. Die Aktualisierungsfrequenz einer herkömmlichen Kamera ist die Bildwiederholfrequenz oder Framerate. Eine solche gemeinsame Bildwiederholfrequenz kennt die ereignisbasierte Kamera nicht, da die Pixelelemente ihre Bildinformationen einzeln und ereignisbasiert ausgeben oder auffrischen. Dabei gibt es aber extrem kurze Ansprechzeiten, die mit einer herkömmlichen Kamera nur zu immensen Kosten mit tausend oder mehr Bildern pro Sekunde erreichbar wären, bei einer ereignisbasierten immer noch möglichen Aktualisierungsfrequenz wäre das mit herkömmlichen Kameras technisch nicht mehr darstellbar. Diese hohe zeitliche Auflösung hat auch den Vorteil, dass es praktisch keine Bewegungsartefakte (motion blurr) gibt. Innerhalb einer der extrem kurzen Aktualisierungsperioden, die einer herkömmlichen Belichtungszeit entspricht, bewegt sich ein Objekt nicht mehrere Pixel weiter, und deshalb wird auch kein verschmiertes Bild aufgenommen.

Der Bildsensor erzeugt bevorzugt als Bildinformation einen Datenstrom aus Ereignissen, die jeweils Koordinateninformationen des zugehörigen Pixelelements, eine Zeitinformation und eine Intensitätsinformation aufweisen. Ein herkömmlicher Datenstrom besteht aus den Intensitäts- oder Grauwerten der Pixel, und der Ortsbezug in der Bildsensorebene entsteht dadurch, dass sämtliche Pixel in geordneter Abfolge ausgelesen werden. Bei dem ereignisbasierten Bildsensor werden stattdessen vorzugsweise Datentupel je Ereignis ausgegeben, die das Ereignis zuordenbar machen. Dabei wird der Ort des zugehörigen Pixelelements, die Richtung ±1 der Intensitätsänderung und/oder die zum Ereignis gemessene Intensität sowie ein Zeitstempel festgehalten. Dadurch müssen trotz der hohen effektiven Bildwiederholrate nur wenige Daten ausgelesen werden.

Vorzugsweise wird der Datenstrom durch Auffüllen mit Nullen in eine Matrix gewandelt, deren Basis durch die Anordnung der Pixelelemente auf dem Bildsensor und die Zeit gebildet ist. Für die weitere Verarbeitung ist häufig eine gewohnte Matrixdarstellung geeigneter, die aus einer Sequenz zeitlich aufeinander folgender Einzelbilder besteht, d.h. aus in der Zeit aneinandergereihten Schichten der jeweils zu einem festen Zeitpunkt aufgenommenen Intensitätsverteilung über die Pixelelemente des Bildsensors. Die Granulierung der Zeitrichtung würde herkömmlich durch die Framerate vorgegeben, bei einer ereignisbasierten Kamera kann sie viel feiner festgelegt werden. Durch die Ereignisse wird letztlich eine dünn besetzte Matrix (sparse matrix) erzeugt, der Datenstrom von dem ereignisbasierten Bildsensor entspricht einer speicher- und bandbreitensparenden Repräsentation davon.

Die benachbarten Pixelelemente bilden bevorzugt mindestens eine Reihenanordnung auf dem Bildsensor. Durch entsprechende Ausrichtung der Kamera zu Bewegungsrichtung kann erreicht werden, dass die Reihenanordnung mit den Zeilen oder Spalten des ereignisbasierten Bildsensors übereinstimmt. Ansonsten bildet die Reihenanordnung eine Linie durch mehrere Zeilen und Spalten. Prinzipiell genügt eine Reihenanordnung, um die Geschwindigkeit und damit Höhe zu messen. Vorzugsweise werden aber mehrere oder sogar alle vorhandenen Reihenanordnungen in Bewegungsrichtung für die Höhenbestimmung ausgewertet. Denn zum einen ist die laterale Position des jeweiligen Objekts a priori nicht bekannt. Zum anderen kann die Verwendung mehrerer Reihen für eine Überbestimmung beziehungsweise redundante Messung mit insgesamt höherer Genauigkeit von Vorteil sein.

Die Kamera ist bevorzugt stationär an einer Fördereinrichtung montiert, auf der die Objekte gefördert werden. Damit ist eine wichtige Gruppe von Anwendungen abgedeckt. Die geförderten Objekte bilden den Objektstrom. Deren Bewegungsrichtung und Geschwindigkeit ist somit ebenso festgelegt wie die Höhe des Förderbandes als Bezug für die Höhenmessung.

Der Steuer- und Auswertungseinheit ist bevorzugt die Geschwindigkeit der Objekte vorgegeben, insbesondere durch Parametrierung oder Verbindung mit einem weiteren Sensor oder einer übergeordneten Steuerung. Hier ist nicht die Geschwindigkeit des Objektbildes auf dem Bildsensor gemeint, sondern die tatsächliche Geschwindigkeit des Objekts. Diese Geschwindigkeit ist in einigen Ausführungsformen vorab bekannt und kann parametriert werden, etwa bei einer festen Fördergeschwindigkeit. Alternativ ist denkbar, dass dies extern gemessen wird, beispielsweise mit Inkrementalgebern an einem Förderband, oder dass eine Förderersteuerung die Geschwindigkeit übergibt, mit der auch der Objektstrom bewegt wird.

Die Steuer- und Auswertungseinheit ist bevorzugt dafür ausgebildet, die Geschwindigkeit der Objekte aus den Bilddaten zu bestimmen, indem die Geschwindigkeit des Objektbildes eines Referenzobjekts in bekanntem Abstand bestimmt wird, insbesondere eines Förderbandes. Die Kamera kann die Geschwindigkeit auch selbst messen. Dazu bezieht sie ihre Messung der Geschwindigkeit des Objektbildes auf ein Referenzobjekt in einem bekannten Abstand. Dafür kommt insbesondere das Förderband in Betracht.

Die Steuer- und Auswertungseinheit ist bevorzugt dafür ausgebildet, einen optischen Marker des Referenzobjekts zu erkennen, insbesondere eine modulierte Lichtquelle. Der optische Marker dient dazu, das Referenzobjekt in bekanntem Abstand einfacher und verlässlicher als solches zu erkennen. Der optische Marker kann passiv sein, etwa in Form von Querstreifen auf dem Förderband. Alternativ werden Lichtquellen als optische Marker eingesetzt, die eine charakteristische Blinksequenz verwenden, im einfachsten Fall mit einer bestimmten Modulationsfrequenz pulsieren.

Die Relativbewegung des Objektstroms ist bevorzugt gleichförmig, und die Steuer- und Auswertungseinheit ist dafür ausgebildet, eine Ausgleichsgerade der Messreihe und deren Steigung als Maß für die Höhe zu bestimmen. Für den häufigen Fall einer zumindest im Wesentlichen konstanten Geschwindigkeit der Objekte vereinfacht sich die Bestimmung der Höhe mittels ereignisbasiertem Bildsensor noch weiter. Die Messreihen beziehungsweise die dadurch gewonnene diskrete Funktion der nacheinander in benachbarten Pixeln längs der Bewegungsrichtung ausgelösten Ereignisse wird dann nämlich eine Gerade. Die Parameter dieser Gerade können durch eine Ausgleichsgrade rekonstruiert werden. Dazu genügt es im einfachsten Fall, zwei beliebige Ereignisse heranzuziehen, vorzugsweise in größerem oder maximalem Pixelabstand. Ansonsten stehen sämtliche bekannten Algorithmen für einen Geradenfit zur Verfügung, die mehrere oder alle Punkte der Messreihe einbeziehen. Die Steigung der Geraden wiederum steht in linearem Zusammenhang mit der gesuchten Höhe, ist also lediglich noch mit einem durch Parameter der Kamera und deren Montageposition gegebenen Faktor umzurechnen.

Die Objekte weisen bevorzugt eine der der Kamera zugewandte ebene Fläche auf. Das ist bei sehr vielen Paketen der Fall. Mit einer ebenen Deckfläche ändert sich der Abstand des Objekts während der Bewegung durch das Sichtfeld der Kamera nicht. Abweichungen von dieser Randbedingung einer ebenen Fläche schränken keineswegs die Anwendung der erfindungsgemäßen Lehre ein, sie führen aber zu gewissen Messfehlern der dann nicht skalaren Höhe.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine Darstellung einer Kamera, die über einer Fördereinrichtung mit darauf geförderten Objekten montiert ist;
- Fig. 2: eine beispielhafte Intensitätsverteilung eines Pixels zur Erläuterung von ereignisbasierter Erfassung von Bildinformation;
- Fig. 3: beispielhafte Messreihen von Zeitpunkten, zu denen in Bewegungsrichtung benachbarte Pixel aufgrund einer Objektkante ein Ereignis auslösen, für ein langsames und ein schnelles Objekt; und
- Fig. 4: eine schematische Schnittansicht auf das Sichtfeld einer ereignisbasierten Kamera, durch das Objekte unterschiedlicher Höhe gefördert werden.

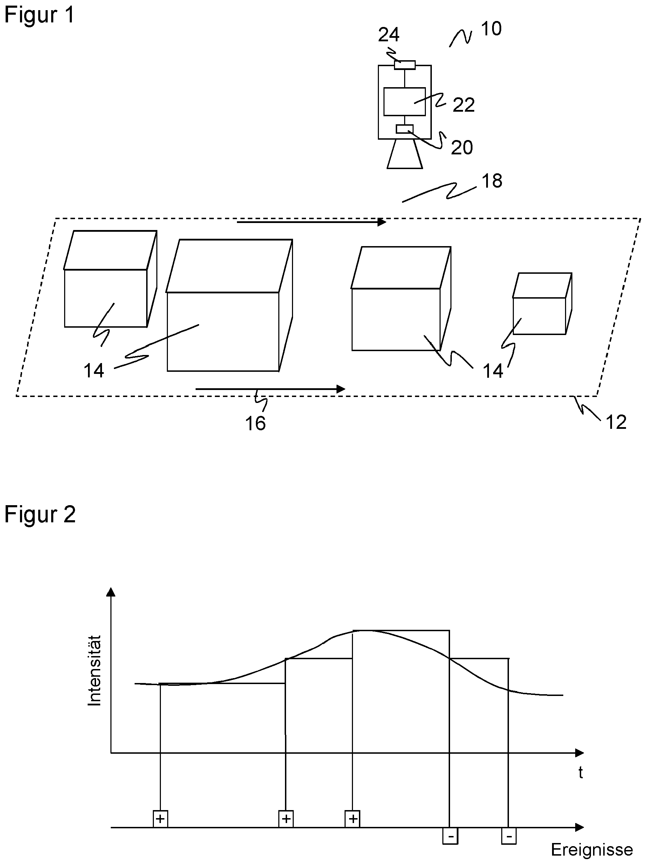

Figur 1 zeigt eine Kamera 10, die über einem Förderband 12 montiert ist, welches Objekte 14, wie durch den Pfeil 16 angedeutet, durch das Sichtfeld 18 der Kamera 10 fördert. Diese stationäre Anwendung der Kamera 10 an einem Förderband ist in der Praxis sehr häufig. Die Erfindung bezieht sich aber zunächst auf die Kamera 10 selbst, so dass weder die besonders vorteilhafte Perspektive von oben noch das Anwendungsbeispiel insgesamt einschränkend verstanden werden darf.

Die Kamera 10 erfasst mit einem Bildsensor 20 Bildinformationen der geförderten Objekte 14. Dieser Bildsensor 20 ist ein ereignisbasierter Bildsensor, und weiter unten werden die Besonderheiten eines ereignisbasierten Bildsensors und der Auswertung von dessen Bildinformationen näher erläutert. Ereignisbasierte Kameras benötigen Dynamik in der aufgenommenen Szenerie, da ansonsten keine Ereignisse registriert werden. Fließbandanwendungen sind daher eine geeignete Anwendung, da eine Bewegung der aufzunehmenden Objekte 14 ist. Das optische Erfassungsprinzip mit dem Bildsensor 20 ist auf keine besondere Geometrie und keinen bestimmten Kameraaufbau festgelegt. Der Bildsensor 20 umfasst in der Regel eine Matrix- oder Zeilenanordnung von Pixeln.

Die eigentliche Aufgabe der Kamera 10 spielt für die Erläuterung der Erfindung eine nebengeordnete Rolle. Beispielsweise werden die Objekte 14 auf bestimmte Merkmale geprüft oder vermessen. Auch eine Weiterbildung als kamerabasierter Codeleser ist vorstellbar, mit dem dann Codebereiche auf den Objekten 14 erfasst und die dort angebrachten Codes ausgelesen werden. In dieser Beschreibung liegt der Schwerpunkt auf einer Messung der Höhe der Objekte 14, die als eigentliche Messgröße oder als Hilfsgröße bestimmt wird.

Für diese Auswertungen ist eine Steuer- und Auswertungseinheit 22 mit dem Bildsensor 20 verbunden, die dessen Bildinformationen ausliest und weiterverarbeitet. Über eine Schnittstelle 24 gibt die Kamera 10 Informationen aus. Die Funktionalität der Steuer- und Auswertungseinheit 22 kann auch unter Ausnutzen der Schnittstelle 24 zumindest teilweise extern vorgesehen sein, etwa durch Anschluss an eine übergeordnete Steuerung, an ein Netzwerk oder an eine Cloud. Umgekehrt kann die Kamera 10 über die Schnittstelle 24 oder eine weitere Schnittstelle Informationen von weiteren Sensoren oder einer übergeordneten Steuerung erhalten. Dadurch ist beispielsweise möglich, eine feste oder aktuelle Fördergeschwindigkeit des Förderbandes an die Kamera 10 zu übermitteln.

Figur 2 zeigt zur Erläuterung des Funktionsprinzips des ereignisbasierten Bildsensors 20 im oberen Teil einen rein beispielhaften zeitlichen Intensitätsverlauf in einem Pixelelement des Bildsensors 20. Ein herkömmlicher Bildsensor würde diesen Intensitätsverlauf über ein vorgegebenes Belichtungszeitfenster integrieren, die integrierten Werte aller Pixelelemente würden im Takt einer vorgegebenen Framerate ausgegeben und dann für das nächste Bild zurückgesetzt.

Das Pixelelement des ereignisbasierten Bildsensors 20 reagiert stattdessen individuell und unabhängig von einer Framerate auf eine Intensitätsänderung. Mit senkrechten Strichen sind jeweils Zeitpunkte markiert, zu denen eine Intensitätsänderung festgestellt wurde. Im unteren Teil der Figur 2 sind zu diesen Zeitpunkten Ereignisse mit Plus und Minus je nach Richtung der Intensitätsänderung dargestellt. Es ist denkbar, dass das Pixelelement nicht auf jegliche Intensitätsänderung reagiert, sondern erst, wenn eine gewisse Schwelle überschritten wird. Das Pixelelement wird ereignisbasiert zu den Zeitpunkten ausgelesen, zu denen eine Intensitätsänderung erkannt wird, und gibt dann das Vorzeichen aus. Die Bildinformationen können anschließend noch um den Wert Null zu den Zeiten ergänzt werden, in denen es kein Ereignis gab, damit ein Bild über alle Pixelelemente des Bildsensors 20 entsteht. Diese Bild zeigt anders als von herkömmlichen Bildern gewohnt nur die bewegten Kanten an, seien es Objektkonturen, Schatten oder Aufdrucke.

Neben solchen differenziellen ereignisbasierten Kameras gibt es auch integrierende ereignisbasierte Kameras. Sie reagiert ganz analog auf Intensitätsänderungen. Anstelle einer Ausgabe der Richtung der Intensitätsänderung wird aber in einem durch das Ereignis vorgegebenen Zeitfenster das einfallende Licht integriert. Dadurch entsteht ein Grauwert. Differenzielle und integrierende ereignisbasierte Kameras haben einen unterschiedlichen Hardwareaufbau, und die differenzielle ereignisbasierte Kamera ist schneller, da sie kein Integrationszeitfenster benötigt. Zur Technologie einer ereignisbasierten Kamera wird ergänzend auf die einleitend genannte Patentliteratur und wissenschaftliche Literatur verwiesen.

Durch die ereignisbasierte Erfassung von Bildinformationen entsteht ein dünn besetzter (sparse) dreidimensionaler Datensatz, da für eine feste Zeit anders als bei einer herkömmlichen Kamera nicht jedes Pixelelement eine Bildinformation liefert, sondern nur diejenigen, die ein Ereignis in Form einer Intensitätsänderung registrieren. Ein Ereignis wird beispielsweise als Tupel mit dem Vorzeichen der Intensitätsänderung bei differentieller ereignisbasierter Kamera beziehungsweise einem Grauwert bei integrierende ereignisbasierter Kamera, der Pixelposition auf dem Bildsensor 20 in X- und Y-Richtung und einem Zeitstempel ausgegeben. Solche Ereignisse können nachgelagert durch Auffüllen mit Nullen wieder zu einer üblichen Matrix ergänzt werden. Zwei Dimensionen entsprechen dann der Pixelanordnung auf dem Bildsensor 20. Wird auch die Zeit berücksichtigt, so entsteht eine dreidimensionale Matrix, deren Schichten jeweils zweidimensionale Bewegungsbilder sind und deren dritte Dimension die Zeit vorzugsweise mit extrem hoher Zeitauflösung im Bereich höchstens weniger Mikrosekunden oder noch darunter ist. Das entspricht einem Film mit durch die Schichten gebildeten Frames, jedoch mit ungewöhnlich hoher Framerate und nur wenigen von Null verschiedenen Pixeln.

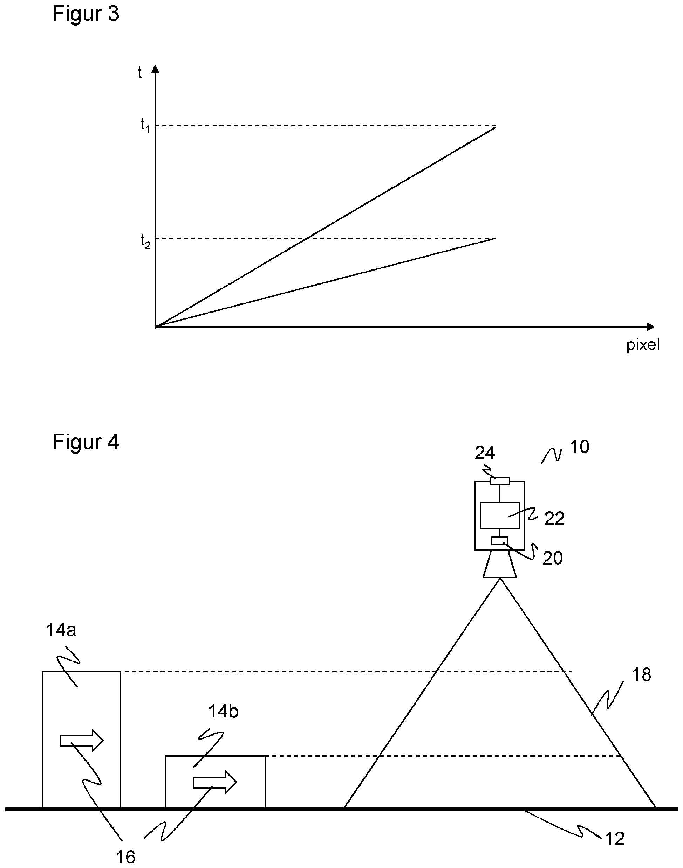

Figur 3 illustriert, wie sich verschiedene Geschwindigkeiten der Objekte 14 im Datensatz niederschlagen. Dabei wird nur eine in Förderrichtung ausgerichtete Reihe von Pixeln und damit eine Raumdimension betrachtet. Tritt ein Objekt 14 in das Sichtfeld 18 der Kamera 10 ein, so werden diese Pixel nacheinander ein Ereignis registrieren, beispielsweise ausgelöst durch die bewegte Vorderkante oder andere mit dem Förderband 12 bewegte Strukturen des Objekts 14. Die entsprechenden Zeitpunkte dieser Ereignisse sind in Figur 2 auf der Y-Achse in Abhängigkeit von der Pixelnummer und damit Pixelposition in Bewegungsrichtung aufgetragen.

So entsteht eine Messreihe von Zeitpunkten zu Orten auf dem Bildsensor 20, mit denen die Bewegung des Objektsbildes auf dem Bildsensor 20 beschrieben wird. Bei gleichförmiger Bewegung des Objekts 14 ist das eine Gerade, Phasen der Beschleunigung würden sich je nach Vorzeichen in ansteigenden oder abfallenden Kurvenabschnitten äußern. Die diskrete Messreihe kann zu einer kontinuierlichen Messkurve oder Geraden verbunden werden.

Je nach Geschwindigkeit des Objektbildes auf dem Bildsensor wird die Messreihe getaucht oder gestreckt. In Figur 3 sind Beispiele für zwei gleichförmig bewegte Objekte 14 gezeigt, von denen eines doppelt so schnell ist wie das andere. Dementsprechend hat die eine Gerade die doppelte Steigung der anderen, und das Verhältnis der Endzeitpunkte t₁ und t₂, zu denen das langsamere Objekt beziehungsweise das schnellere Objekt das Sichtfeld 18 verlässt, ist eins zu zwei. In einer einfachen Auswertung könnte also die Geschwindigkeit des Objektsbildes auf dem Bildsensor 20 bereits durch diese Endzeitpunkte gemessen werden. Die Steigung einer Geraden lässt sich auch aus beliebigen zwei anderen Messpunkten bestimmen, oder unter der Voraussetzung eines gemeinsamen Ursprungs schon aus jedem einzelnen Messpunkt. Robuster ist, eine Ausgleichsgerade für mehrere oder alle Messpunkte zu suchen.

Figur 4 zeigt eine schematische Schnittansicht auf die Kamera 10 und ihr Sichtfeld 18 sowie zwei Objekte 14a-b unterschiedlicher Höhe, die durch das Sichtfeld 18 gefördert werden. Da die laterale Ausdehnung des Sichtfeldes 18 (Field of View) mit zunehmender Nähe zur Kamera 10 abnimmt, ist die von der Kamera 10 wahrgenommene Geschwindigkeit für höhere Objekte 14a größer als für niedrige Objekte 14b. Dieser Zusammenhang ist nach dem Strahlensatz sogar linear. Dabei ist wichtig, zwischen der wahrgenommenen Geschwindigkeit, also der Geschwindigkeit des Objektbildes auf dem Bildsensor 14 in Pixel/Zeit, und der realen Geschwindigkeit der Objekte 14a-b zu unterscheiden. Letztere ist selbstverständlich von der Höhe der Objekte 14a-b gänzlich unabhängig.

In Kenntnis der realen Geschwindigkeit und der Kameraparameter, insbesondere der Montagehöhe über dem Förderband 12, kann daher die aus den Bilddaten gemessene wahrgenommenen Geschwindigkeit in die Höhe der Objekte 14a-b umgerechnet werden. Konkret ist dazu bei gleichförmiger Bewegung lediglich die Steigung der in Figur 3 illustrierten Geraden zu bestimmen und mit einem Faktor zu reskalieren.

Dabei wird die Geschwindigkeit des Förderbandes und damit der Objekte 14a-b parametriert, mit externen Sensoren gemessen, insbesondere Inkrementalgebern, oder von einer übergeordneten Steuerung mitgeteilt, die ihrerseits die Geschwindigkeit vorgibt oder mit eigenen Sensoren misst. Denkbar ist auch, das Förderband 12 mit optischen Markern zu versehen und deren wahrgenommene Geschwindigkeit mit dem beschriebenen Verfahren zu messen. Da der Abstand von der Kamera 10 zum Förderband 12 bekannt ist, kann diese wahrgenommene Geschwindigkeit in die reale Geschwindigkeit umgerechnet werden. Die optischen Marker ermöglichen es, das ansonsten strukturlose Förderband 12 verlässlich zu erkennen. Vorzugsweise dienen dazu aktive Marker, etwa mit dem Förderband mitlaufende LEDs. Sie können sogar noch einen eindeutig erkennbaren optischen Code erzeugen, etwa eine Blinksequenz, wobei eine regelmäßige Wiederholung mit einer bestimmten Frequenz oft schon ausreicht.

## Patentansprüche

1. Kamera (10), die einen Bildsensor (20) mit einer Vielzahl von Pixelelementen zur Aufnahme von Bilddaten eines in einer Bewegungsrichtung (16) relativ zu der Kamera (10) bewegten Objektsstroms mit Objekten (14) einer Höhe sowie eine Steuer- und Auswertungseinheit (22) aufweist, die dafür ausgebildet ist, anhand der Bilddaten die Höhe eines jeweiligen Objekts (14) zu bestimmen,
**dadurch gekennzeichnet,**
**dass** der Bildsensor (20) ein ereignisbasierter Bildsensor ist und dass die Steuer- und Auswertungseinheit (22) dafür ausgebildet ist, eine Messreihe von Zeitpunkten zu erfassen, zu denen in Bewegungsrichtung benachbarte Pixelelemente nacheinander ein Ereignis registrieren, aus der Messreihe eine Geschwindigkeit eines Objektbildes des Objekts (14) auf dem Bildsensor (20) und daraus die Höhe zu bestimmen.

2. Kamera (10) nach Anspruch 1,
wobei ein jeweiliges Pixelelement feststellt, wenn sich die von dem Pixelelement erfasste Intensität ändert, und genau dann ereignisbasiert eine Bildinformation liefert, wobei insbesondere das Pixelelement als Bildinformation eine differentielle Information liefert, ob sich die Intensität verringert oder erhöht hat, und/oder eine integrierte Intensität in einem durch eine Änderung der Intensität bestimmten Zeitfenster liefert.

3. Kamera (10) nach Anspruch 1 oder 2,
wobei die benachbarten Pixelelemente mindestens eine Reihenanordnung auf dem Bildsensor (20) bilden, insbesondere eine Zeile oder Spalte einer Matrixanordnung.

4. Kamera (10) nach einem der vorhergehenden Ansprüche,
die stationär an einer Fördereinrichtung (12) montiert ist, auf der die Objekte (14) gefördert werden.

5. Kamera (10) nach einem der vorhergehenden Ansprüche,
wobei der Steuer- und Auswertungseinheit (22) die Geschwindigkeit der Objekte (14) vorgegeben ist, insbesondere durch Parametrierung oder Verbindung mit einem weiteren Sensor oder einer übergeordneten Steuerung.

6. Kamera (10) nach einem der vorhergehenden Ansprüche,
wobei die Steuer- und Auswertungseinheit (22) dafür ausgebildet ist, die Geschwindigkeit der Objekte (14) aus den Bilddaten zu bestimmen, indem die Geschwindigkeit des Objektbildes eines Referenzobjekts in bekanntem Abstand bestimmt wird, insbesondere eines Förderbandes (12).

7. Kamera (10) nach Anspruch 6,
wobei die Steuer- und Auswertungseinheit (22) dafür ausgebildet ist, einen optischen Marker des Referenzobjekts (12) zu erkennen, insbesondere eine modulierte Lichtquelle.

8. Kamera (10) nach einem der vorhergehenden Ansprüche,
wobei die Relativbewegung des Objektstroms gleichförmig ist, und wobei die Steuer- und Auswertungseinheit (22) dafür ausgebildet ist, eine Ausgleichsgerade der Messreihe und deren Steigung als Maß für die Höhe zu bestimmen.

9. Kamera (10) nach einem der vorhergehenden Ansprüche,
wobei die Objekte (14) eine der Kamera (10) zugewandte ebene Fläche aufweisen.

10. Verfahren zur Bestimmung der Höhe von Objekten (14) eines sich in einer Bewegungsrichtung (16) bewegenden Objektstroms, bei dem Bilddaten des Objektstroms von einem Bildsensor (20) mit einer Vielzahl von Pixelelementen aufgenommen und ausgewertet werden, um die Höhe eines jeweiligen Objekts (14) zu bestimmen,
**dadurch gekennzeichnet,**
**dass** die Bilddaten mit einem ereignisbasierten Bildsensor (20) aufgenommen werden und dass eine Messreihe von Zeitpunkten erfasst wird, zu denen in Bewegungsrichtung benachbarte Pixelelemente nacheinander ein Ereignis registrieren und dass aus der Messreihe eine Geschwindigkeit eines Objektbildes des Objekts (14) auf dem Bildsensor (20) und daraus die Höhe bestimmt wird.

## Claims

1. A camera (10) comprising an image sensor (20) having a plurality of pixel elements for recording image data of an object stream having objects (14) of a height moved in a direction of movement (16) relative to the camera (10) and a control and evaluation unit (22) configured to determine the height of a respective object (14) on the basis of the image data,
**characterized in that** the image sensor (20) is an event-based image sensor and **in that** the control and evaluation unit (22) is configured to detect a measurement series of points in time at which pixel elements adjacent in the direction of movement consecutively register an event, to determine a speed of an object image of the object (14) on the image sensor (20) from the measurement series and, from this, the height.

2. The camera (10) according to claim 1,
wherein a respective pixel element detects when the intensity detected by the pixel element changes and exactly then provides event-based image information, wherein in particular the pixel element provides as image information differential information whether the intensity has decreased or increased and/or provides an integrated intensity in a time window determined by a change of the intensity.

3. The camera (10) according to claim 1 or 2,
wherein the adjacent pixel elements form at least one row arrangement on the image sensor (20), in particular a row or column of a matrix arrangement.

4. The camera (10) according to any of the preceding claims,
that is stationarily mounted at a conveyor device (12) on which the objects (14) are conveyed.

5. The camera (10) according to any of the preceding claims,
wherein the speed of the objects (14) is predetermined for the control and evaluation unit (22), in particular by parameterization or connection to a further sensor or to a higher-level control system.

6. The camera (10) according to any of the preceding claims,
wherein the control and evaluation unit (22) is configured to determine the speed of the objects (14) from the image data by determining the speed of the object image of a reference object at a known distance, in particular a conveyor belt (12).

7. The camera (10) according to claim 6,
wherein the control and evaluation unit (22) is configured to detect an optical marker of the reference object (12), in particular a modulated light source.

8. The camera (10) according to any of the preceding claims,
wherein the relative movement of the object stream is uniform, and wherein the control and evaluation unit (22) is configured to determine a compensation line of the measurement series and its slope as a measure of the height.

9. The camera (10) according to any of the preceding claims,
wherein the objects (14) have a flat surface facing the camera (10).

10. A method for determining the height of objects (14) of an object stream moving in a direction of movement (16), wherein image data of the object stream are recorded by an image sensor (20) having a plurality of pixel elements and are evaluated in order to determine the height of a respective object (14),
**characterized in that** the image data are recorded by an event-based image sensor (20), and **in that** a measurement series of points in time at which pixel elements adjacent in the direction of movement consecutively register an event is recorded, and **in that**, from that measurement series, a speed of an object image of the object (14) on the image sensor (20) and, from this, the height are determined.

## Revendications

1. Caméra (10) comprenant un capteur d'image (20) ayant une pluralité d'éléments de pixel pour enregistrer des données d'image d'un flux d'objets ayant des objets (14) d'une hauteur déplacés dans une direction de mouvement (16) par rapport à la caméra (10) et une unité de commande et d'évaluation (22) configurée pour déterminer la hauteur d'un objet respectif (14) sur la base des données d'image,
**caractérisé en ce que** le capteur d'image (20) est un capteur d'image basé sur des événements et **en ce que** l'unité de commande et d'évaluation (22) est configurée pour détecter une série de mesures de moments auxquels des éléments de pixels voisins dans la direction de mouvement enregistrent successivement un événement, pour déterminer une vitesse d'une image de l'objet (14) sur le capteur d'image (20) à partir de la série de mesures et, à partir de celle-ci, la hauteur.

2. Caméra (10) selon la revendication 1,
dans laquelle un élément de pixel respectif détecte quand l'intensité détectée par l'élément de pixel change et fournit alors exactement des informations d'image basées sur un événement, dans laquelle en particulier l'élément de pixel fournit comme information d'image une information différentielle si l'intensité a diminué ou augmenté et/ou fournit une intensité intégrée dans une fenêtre de temps déterminée par un changement de l'intensité.

3. Caméra (10) selon la revendication 1 ou 2,
dans laquelle les éléments de pixels adjacents forment au moins un agencement de lignes sur le capteur d'image (20), en particulier une ligne ou une colonne d'un agencement matriciel.

4. Caméra (10) selon l'une des revendications précédentes,
qui est montée de manière fixe sur un dispositif de transport (12) sur lequel les objets (14) sont transportés.

5. Caméra (10) selon l'une des revendications précédentes,
dans laquelle la vitesse des objets (14) est prédéterminée pour l'unité de commande et d'évaluation (22), en particulier par paramétrage ou connexion à un autre capteur ou à une commande supérieure.

6. Caméra (10) selon l'une des revendications précédentes,
dans laquelle l'unité de commande et d'évaluation (22) est configurée pour déterminer la vitesse des objets (14) à partir des données d'image en déterminant la vitesse de l'image d'un objet de référence à une distance connue, en particulier d'une bande transporteuse (12).

7. Caméra (10) selon la revendication 6,
dans laquelle l'unité de commande et d'évaluation (22) est configurée pour reconnaître un marqueur optique de l'objet de référence (12), notamment une source lumineuse modulée.

8. Caméra (10) selon l'une des revendications précédentes,
dans laquelle le mouvement relatif du flux d'objets est uniforme, et dans laquelle l'unité de commande et d'évaluation (22) est configurée pour déterminer une ligne de compensation de la série de mesures et sa pente en tant que mesure de la hauteur.

9. Caméra (10) selon l'une des revendications précédentes,
dans laquelle les objets (14) comportent une surface plane tournée vers la caméra (10).

10. Procédé pour déterminer la hauteur d'objets (14) d'un flux d'objets se déplaçant dans une direction de mouvement (16), dans lequel des données d'image du flux d'objets sont enregistrées par un capteur d'image (20) comportant une pluralité d'éléments de pixel et sont évaluées afin de déterminer la hauteur d'un objet respectif (14),
**caractérisé en ce que** les données d'image sont enregistrées par un capteur d'image (20) basé sur des événements, et **en ce qu'**une série de mesures de moments est enregistrée auxquels des éléments de pixels voisins dans la direction du mouvement enregistrent successivement un événement, et **en ce que**, à partir de cette série de mesures, une vitesse d'une image de l'objet (14) sur le capteur d'image (20) et, à partir de celle-ci, la hauteur sont déterminées.
